# EUROPEAN PATENT APPLICATION

(11) **EP 4 769 037 A1**
(43) Date of publication of application: **01.07.2026**
(21) Application number: 24897854.6
(22) Date of filing: 02.10.2024
(51) Int. Cl.: G04G 17/04, G04G 17/08, G06F 1/16

(54) **WEARABLE DEVICE INCLUDING FLEXIBLE DISPLAY**

(30) Priority: 28.11.2023 KR 20230168721; 17.01.2024 KR 20240007686
(71) Applicant: Samsung Electronics Co., Ltd., Suwon-si, Gyeonggi-do 16677 (KR)
(72) Inventor: KIM, Kijung, Suwon-si Gyeonggi-do 16677 (KR); LEE, Taehan, Suwon-si Gyeonggi-do 16677 (KR)
(74) Representative: HGF
(86) International application number: PCT/KR2024/014998
(87) International publication number: WO 2025/116255

(57) **Abstract**

Disclosed is a wearable device. The wearable device may comprise: a frame; a first band(150) extending from a portion of a side surface of the frame; a second band extending from the remaining portion of the side surface of the frame; a flexible display disposed above the frame and on the first band and the second band; a fixing member accommodating a portion of the flexible display and disposed at an end portion of the first band, and configured to be fastened to an end portion of the second band; and an actuator configured to transmit a driving force to the flexible display and disposed in the fixing member. Various other embodiments are possible.

## Description

### [Technical Field]

The present disclosure relates to a wearable device including a flexible display.

### [Background Art]

Since a wearable device is used by being worn on a body of a user, it is necessary for the wearable device to be lightweight and miniaturized. The wearable device may include structures for expanding a display area of a display disposed in the miniaturized wearable device.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

A wearable device may comprise a frame. The wearable device may further comprise a first band. The first band may extend from a portion of a side surface of the frame. The wearable device may further comprise a second band. The second band may extend from a remaining portion of the side surface of the frame. The wearable device may further comprise a flexible display. The flexible display may be disposed on a top of the frame, the first band, and the second band. The wearable device may further comprise a fixing member. The fixing member may be disposed to an end portion of the first band, may accommodate a portion of the flexible display, and may be configured to be fastened to an end portion of the second band. The wearable device may further comprise an actuator. The actuator may be disposed within the fixing member and may be configured to transmit a driving force to the flexible display. The actuator may include a motor. The actuator may include a rack gear. The rack gear may be disposed on a surface of the flexible display. The actuator may include a pinion gear. The pinion gear may engage with the rack gear and may receive rotational force from the motor.

A wearable device may comprise a frame. The frame may have an open bottom. The wearable device may further comprise a plate. The pate may contact the bottom of the frame. The wearable device may further comprise a first band. The first band may be fixed to a portion of a side surface of the frame and may extend from the portion of the side surface of the frame. The wearable device may further comprise a second band. The second band may be fixed to a remaining portion of the side surface of the frame and may extend from the remaining portion of the side surface of the frame in a direction opposite to the first band. The wearable device may further comprise a flexible display. The flexible display may be disposed on a top of the frame, the first band, and the second band. The wearable device may further comprise a fixing member. The fixing member may be disposed to an end portion of the first band, may accommodate a portion of the flexible display, and may be configured to be fastened to an end portion of the second band. The wearable device may further comprise an actuator. The actuator may be disposed within the fixing member and may be configured to transmit a driving force to the flexible display such that a portion of the flexible display slides out to an exterior of the fixing member or slides into the fixing member. The actuator may include a shaft. The actuator may further include a power conversion structure. The power conversion structure may be configured to convert rotational motion of the shaft into linear motion to move the flexible display.

### [Description of the Drawings]

FIG. 1A is a perspective view of a front surface of a mobile electronic device according to an embodiment.
FIG. 1B is a perspective view of a rear surface of the electronic device of FIG. 1A.
FIG. 1C is an exploded perspective view of the electronic device of FIG. 1A.
FIG. 2 is an exploded view viewed from a side surface for illustrating a coupling relationship of an electronic device.
FIGS. 3 and 4 are drawings illustrating a fixing member coupled to a band.
FIG. 5 illustrates a structure of fixing members.
FIG. 6 schematically illustrates an internal structure of a fixing member.
FIGS. 7A, 7B, 7C, and 7D illustrate a structure of an exemplary front plate attached on a display.
FIG. 8 schematically illustrates a power transmission structure disposed within a fixing member.
FIGS. 9A and 9B illustrate gears configuring an exemplary power transmission structure.
FIG. 10 is a block diagram of an exemplary electronic device.
FIG. 11 is a plan view illustrating a front surface of a display panel.
FIG. 12 illustrates an example of utilization of a display disposed on a band.
FIG. 13A is a flowchart illustrating an operation for a change in state of a display.
FIGS. 13B and 13C illustrate examples of deformation of the display.
FIG. 14A is a flowchart illustrating an operation of moving an object displayed on a display area of a display.
FIG. 14B is a drawing illustrating movement and transition of an object displayed on the display area of the display.
FIG. 15 is a flowchart illustrating an operation of displaying an image according to expansion of a display area of a display.
FIG. 16 is a flowchart illustrating an operation of displaying an image according to reduction of a display area of a display.
FIG. 17 exemplarily illustrates image display according to a change in the display area of the display.
FIG. 18 is a block diagram of an electronic device in a network environment according to various embodiments.

### [Mode for Invention]

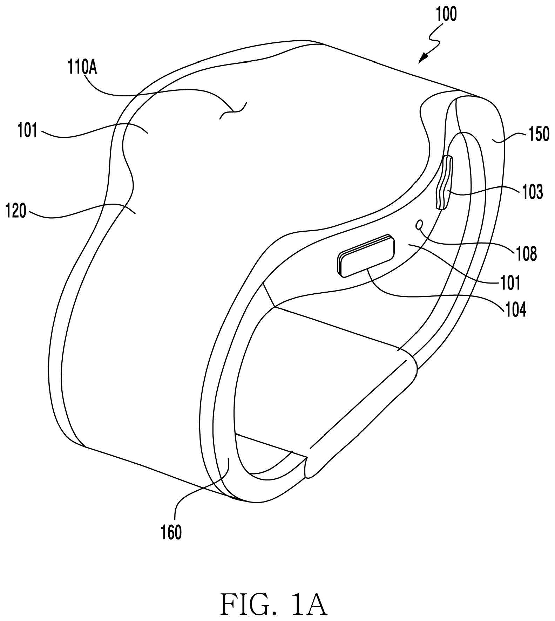

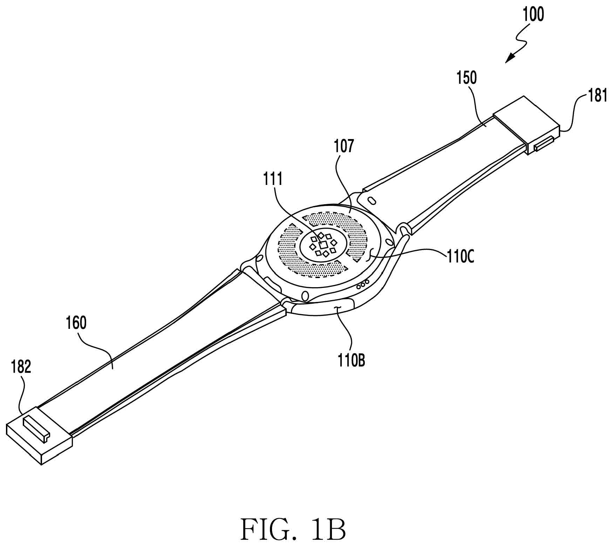

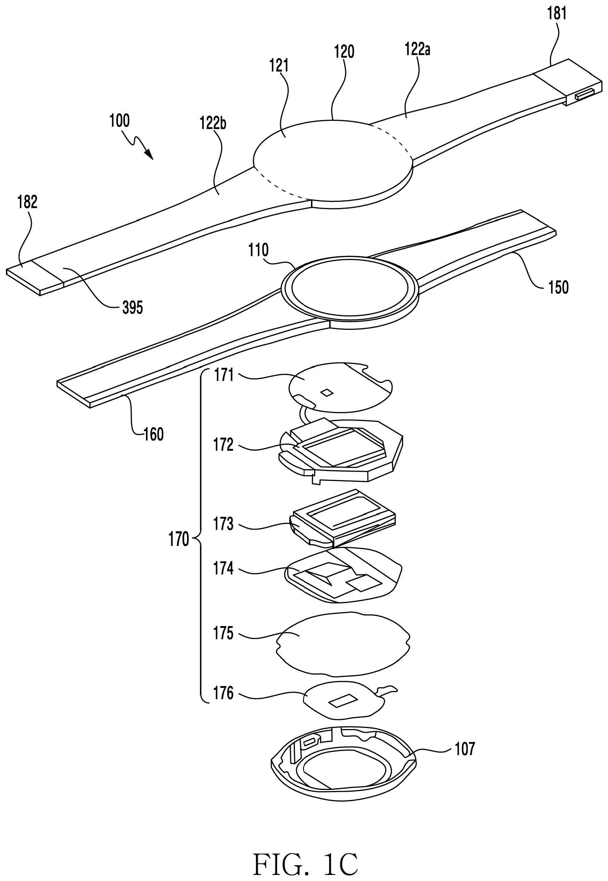

FIG. 1A is a perspective view of a front surface of a mobile electronic device according to an embodiment. FIG. 1B is a perspective view of a rear surface of the electronic device of FIG. 1A. FIG. 1C is an exploded perspective view of the electronic device of FIG. 1A.

Referring to FIG. 1A and FIG. 1B, an electronic device 100 according to an embodiment may include a frame 110 including a first surface (or a front surface) 110A and a side surface 110B surrounding an internal space, and a rear plate 107 including a second surface (or a rear surface) 110C that is spaced apart from the first surface 110A of the frame 110 and contacts the side surface 110B to surround the internal space. The electronic device 100 may include bands 150 and 160 extending from a portion of the side surface 110B of the frame 110 and configured to allow the electronic device 100 to be detachably attached to a body part (e.g., a wrist, an ankle, and the like) of a user. The frame 110 including the first surface 110A and the side surface 110B, and the rear plate 107 including the second surface 110C may be referred to as a housing in terms of providing an exterior appearance of the electronic device 100.

The first surface 110A may be formed by a front plate 101 of which at least a portion is substantially transparent (e.g., a glass plate or a polymer plate including various coating layers). The front plate 101 may be disposed on the frame 110, a first band 150, and a second band 160. The front plate 101 may be configured to have rigidity on the frame 110 and have flexibility on the first band 150 and the second band 160. For example, a portion of the front plate 101 disposed on the frame 110 may be thicker than remaining portions (e.g., portions of the front plate 101 disposed on the first band 150 and the second band 160). At least a portion of the portion of the front plate 101 disposed on the frame 110 may have a material different from a material of the remaining portions.

The second surface 110C may be formed by a rear plate 107 that is substantially opaque. The rear plate 107 may be formed of, for example, coated or colored glass, ceramic, polymer, metal (e.g., aluminum, stainless steel (STS), or magnesium), or a combination of at least two of the materials.

The side surface 110B may be formed by the frame 110, which is coupled with the front plate 101 and the rear plate 107 and includes metal and/or polymer. The bands 150 and 160 may be formed of various materials and shapes. The bands 150 and 160 may include fluor elastomers (FKM) or another flexible material. For example, the bands 150 and 160 may be integrally formed of an injection-molded product, rubber, urethane, ceramic, or a combination of at least two of the materials.

The frame 110 and the bands 150 and 160 may be integrally formed. For example, the frame 110 and the bands 150 and 160 may be coupled through an injection process to be integrally formed. The frame 110 may be formed of metal and polymer having rigidity, and the bands 150 and 160 injected into the frame 110 may be formed of a material having flexibility. The frame 110 and the bands 150 and 160 may include an interlocking structure or a concavo-convex structure to prevent separation after injection. Portions of the integrally formed frame 110 and the bands 150 and 160 that contact a display 120 may form a continuous surface.

According to an embodiment, the electronic device 100 may include at least one of the display 120, an audio device 105 and 108, a sensor module 111, and a key input device 103 and 104. In some embodiments, the electronic device 100 may omit at least one of the components (e.g., the key input device 103 and 104, or the sensor module 111) or may additionally include another component.

The display 120 may be exposed through, for example, a substantial portion of the front plate 101. A shape of the display 120 may correspond to a shape of the front plate 101. The display 120 may be integrally formed on the frame 110, the first band 150, and the second band 160. For example, the shape of the display 120 may correspond to shapes of the frame 110, the first band 150, and the second band 160. A portion of the display 120 disposed on the frame 110 may have various shapes such as circular, elliptical, or polygonal according to the shape of the frame 110. A portion of the display 120 disposed on the first band 150 and the second band 160 may be in a strip shape extending from the frame 110. The display 120 may be coupled with or disposed adjacent to touch sensing circuitry, a pressure sensor capable of measuring intensity (pressure) of a touch, and/or a fingerprint sensor.

The audio device 105 and 108 may include a microphone hole 105 and a speaker hole 108. A microphone for obtaining external sound may be disposed inside the microphone hole 105, and in some embodiments, a plurality of microphones may be disposed to detect a direction of sound. The speaker hole 108 may be used as an external speaker and a receiver for calls. In an some embodiments, the speaker hole and the microphone hole may be implemented as one hole, or a speaker without a speaker hole (e.g., a piezo speaker) may be included.

The sensor module 111 may generate an electrical signal or a data value corresponding to an internal operating state of the electronic device 100 or to an external environmental state. The sensor module 111 may include, for example, a biological sensor module 111 (e.g., an HRM sensor) disposed on the second surface 110C of the frame 110. The electronic device 100 may further include at least one of a sensor module not illustrated, for example, a gesture sensor, a gyro sensor, a barometric sensor, a magnetic sensor, an acceleration sensor, a grip sensor, a color sensor, an infrared (IR) sensor, a biological sensor, a temperature sensor, a humidity sensor, or an illuminance sensor.

The key input device 103 and 104 may include key buttons disposed on the side surface 110B of the frame 110. The key input device 103 and 104 may be implemented in another form such as soft keys on the display 120.

Fixing members 181 and 182 may be configured to fix the frame 110 and the bands 150 and 160 to a body part (e.g., a wrist, an ankle, and the like) of a user. A first fixing member 181 and a second fixing member 182 may be coupled to each other to fix the frame 110 and the bands 150 and 160 to the body part of the user. The fixing members 181 and 182 may be in a buckle form.

Referring to FIG. 1C, the electronic device 100 may include an electrical component 170. The electronic device 100 may include the rear plate 107, the frame 110, the display 120, the first band 150, the second band 160, a first antenna 171, a support member 172 (e.g., a bracket), a battery 173, a PCB 174, a sealing member 175, and a second antenna 176. At least one of the components of the electronic device 100 may be omitted, and another component may be added. The support member 172 may be disposed inside the electronic device 100 and connected to the frame 110, or may be integrally formed with the frame 110. The frame 110 may be referred to as a side bezel structure in terms of determining a shape of a side surface of the electronic device 100. The support member 172 may be formed of, for example, a metal material and/or a non-metal (e.g., polymer) material. The support member 172 may have the display 120 coupled to one surface, and the PCB 174 coupled to another surface. A processor, memory, and/or an interface may be mounted on the PCB 174. The processor may include, for example, one or more of a central processing unit, an application processor, a graphic processing unit (GPU), an application processor, a sensor processor, or a communication processor.

The memory may include, for example, a volatile memory or a non-volatile memory. The interface may include, for example, a high definition multimedia interface (HDMI), a universal serial bus (USB) interface, an SD card interface, and/or an audio interface. The interface, for example, may electrically or physically connect the electronic device 100 to an external electronic device, and may include a USB connector, an SD card/MMC connector, or an audio connector.

The battery 173 may be a device for supplying power to at least one component of the electronic device 100 and may include, for example, a non-rechargeable primary cell, a rechargeable secondary cell, or a fuel cell. At least a portion of the battery 173 may be disposed, for example, on substantially the same plane as the PCB 174. The battery 173 may be integrally disposed inside the electronic device 100, or may be detachably disposed with respect to the electronic device 100.

The first antenna 171 may be disposed between the display 120 and the support member 172. The first antenna 171 may include, for example, a near field communication (NFC) antenna, a wireless charging antenna, and/or a magnetic secure transmission (MST) antenna. The first antenna 171 may, for example, perform short-range communication with an external device, or may wirelessly transmit and receive power required for charging, and may transmit a magnetic-based signal including a short-range communication signal or payment data. In another embodiment, an antenna structure may be formed by a portion of the frame 110 and/or a portion of the support member 172, or a combination thereof. Although the first antenna 171 has been described as being disposed between the display 120 and the support member 172, it is not limited thereto.

The second antenna 176 may be disposed between the PCB 174 and the rear plate 107. The second antenna 176 may include, for example, a near field communication (NFC) antenna, a wireless charging antenna, and/or a magnetic secure transmission (MST) antenna. The second antenna 176 may, for example, perform short-range communication with an external device, or may wirelessly transmit and receive power required for charging, and may transmit a magnetic-based signal including a short-range communication signal or payment data. In another embodiment, an antenna structure may be formed by a portion of the frame 110 and/or a portion of the rear plate 107, or a combination thereof. One of the first antenna 171 and the second antenna 176 may be omitted, and when one antenna is omitted, the other antenna may perform the function of the omitted antenna.

The sealing member 175 may be located between the frame 110 and the rear plate 107. The sealing member 175 may be configured to block moisture and foreign matter from entering a space surrounded by the frame 110 and the rear plate 107 from the outside. The electronic device 100 may be referred to as a wearable device in terms of being worn on a body part (e.g., a wrist) of the user.

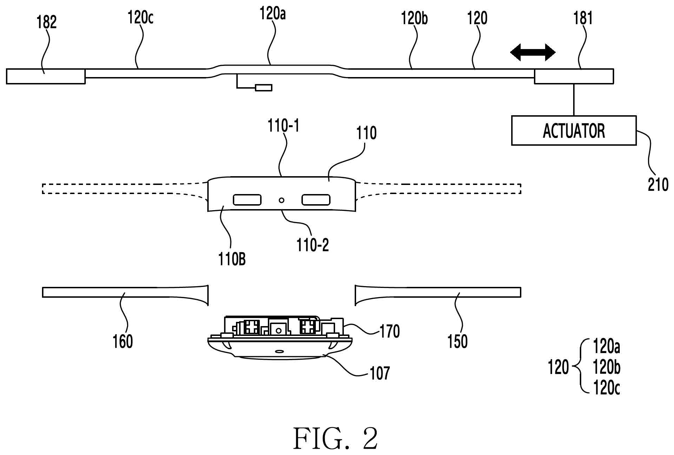

FIG. 2 is an exploded view viewed from a side surface, illustrating a coupling relationship of an electronic device.

Referring to FIG. 2, in a wearable device, an electronic device 100 may include a rear plate 107, a frame 110, a display 120, a first band 150, a second band 160, an electrical component 170, fixing members 181 and 182, and/or an actuator 210. The electronic device 100 may omit one or more of the above-described components and may further include another component.

The frame 110 may include metal or polymer and may have rigidity. A top of the frame 110 may include a support member (e.g., the support member 172 of FIG. 1C) to support a portion of the display 120. The frame 110 may have an open bottom. The first band 150 and the second band 160 may extend from a side surface 110B of the frame 110. The first band 150 may extend from a portion of the side surface 110B of the frame 110, and the second band 160 may extend from a remaining portion of the side surface 110B of the frame 110. The first band 150 and the second band 160 may bend to surround a body part of a user when the electronic device 100 is worn on the body part.

The display 120 may be disposed on a top 110-1 of the frame 110, the first band 150, and the second band 160. The display 120 may include a first portion 120a disposed on the frame 110, a second portion 120b disposed on the first band 150, and a third portion 120c disposed on the second band 160. The first portion 120a may be disposed on the frame 110 formed of a rigid material so that the first portion 120a maintains its shape. The first portion 120a may have rigidity. The second portion 120b and the third portion 120c may be disposed on the first band 150 and the second band 160 formed of a flexible material so that their shapes may change. The second portion 120b and the third portion 120c may have flexibility. The display 120 may bend to surround a body part of a user when the electronic device 100 is worn on the body part. The display 120 may be referred to as a flexible display or a bendable display in terms of being bendable according to a body of a user.

The electronic device 100 may further include the fixing members 181 and 182 at both ends of the display 120. The fixing members 181 and 182 fastened to each other may connect the first band 150 and the second band 160 such that the first band 150 and the second band 160 surround a body part of a user when the user wears the electronic device 100. Although the fixing members 181 and 182 are described as being disposed at both ends of the display 120, the fixing members 181 and 182 may be disposed at end portions of the first band 150 and the second band 160. According to an embodiment, the fixing members 181 and 182 may be disposed at both end portions of an assembly of the first band 150, the second band 160, and the display 120 in a state in which the first band 150, the second band 160, and the display 120 are coupled. The fixing members 181 and 182 may be coupled to both end portions of the assembly of the first band 150, the second band 160, and the display 120. The fixing members 181 and 182 may provide buckle coupling, button coupling, fitting coupling, or hook coupling. A first fixing member 181 among the fixing members 181 and 182 may be configured to be fastened to an end portion of the second band 160. For example, the first fixing member 181 may be coupled to the end portion of the second band 160 or the third portion 120c of the display 120 and be fastened to the end portion of the second band 160. The first fixing member 181 may accommodate a portion of the display 120. The portion of the display 120 may be rolled into the first fixing member 181. As the portion of the display 120 is rolled into the first fixing member 181, a display area of the display 120 may be reduced. For example, the portion of the display 120 may slide into a case configuring the first fixing member 181. As the portion of the display 120 moves outward from the first fixing member 181, the display area of the display 120 may be expanded. For example, the portion of the display 120 may slide out from the interior of the case configuring the first fixing member 181. For example, the actuator 210 within the first fixing member 181 may be configured to slide a displayable portion of the display 120 into the first fixing member 181 or slide the displayable portion of the display 120 out from the first fixing member 181. The display 120 disposed inside the first fixing member 181 may include a displayable portion with an expanded display portion. The display portion may indicate a portion through which visual information is transmitted through the display 120. The displayable portion may indicate a portion providing visual information (instruction information, color, emoticon, notification information, or status information) to a user of the wearable device 100.

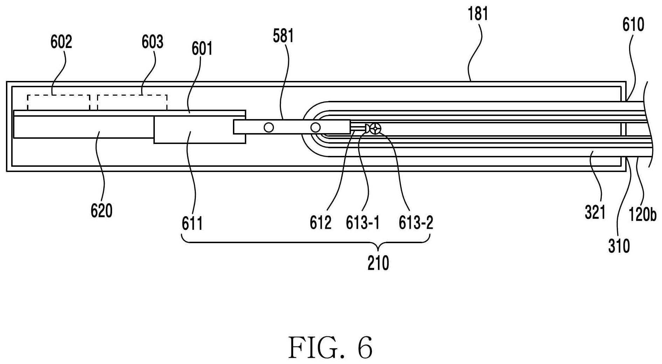

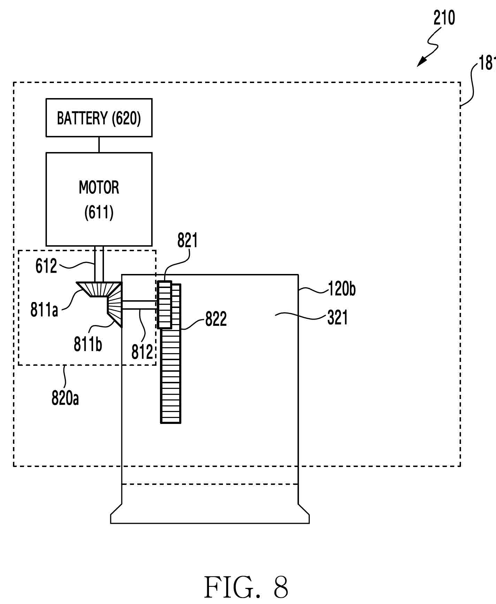

The actuator 210 may be disposed within the first fixing member 181. The actuator 210 may be surrounded by the case of the first fixing member 181. The actuator 210 may be configured to transmit a driving force for moving a portion of the display 120. The actuator 210 may transmit the driving force to the display 120 to move a portion of the display 120 to an exterior of the case of the first fixing member 181 or move the portion of the display 120 into the case. The actuator 210 may include a motor, a rack gear disposed on a surface of the display 120, and a pinion gear engaged with the rack gear and receiving rotational force from the motor. A configuration of the actuator 210 will be described in detail with reference to FIG. 6 and FIG. 8.

The rear plate 107 may surround a bottom 100-2 of the frame 110. The rear plate 107 and the frame 110 may provide a space for the electrical component 170. The electrical component 170 may be attached to the rear plate 107. For example, the electrical component 170 may be disposed on a surface of the rear plate 107 facing a bottom of the frame 110. As the rear plate 107 is coupled to the frame 110, the electrical component 170 may be disposed in a space surrounded by the frame 110 and the rear plate 107.

An assembly process of the electronic device 100 may follow the processes below. The frame 110 and the display 120 may be assembled. In a state in which the display 120 is unfolded, the frame 110 may be disposed in the first portion 120a of the display 120. The first portion 120a of the display 120 and the frame 110 may be bonded. The first portion 120a of the display 120 may be attached to the frame 110. An adhesive member may be disposed between the first portion 120a of the display 120 and the frame 110. The adhesive member may include an adhesive, double-sided tape, thermal compression tape, or waterproof tape. Through the adhesive member disposed between the first portion 120a of the display 120 and the frame 110, the first portion 120a and the frame 110 may be coupled, and foreign substances (e.g., moisture or dust) entering between the first portion 120a and the frame 110 from outside may be restricted from being transmitted into an interior of the electronic device 100.

The first band 150 and the second band 160 contacting the second portion 120b and the third portion 120c of the display 120 may be formed by an injection process. The first band 150 and the second band 160 may be cured in a mold into which resin molten resin is injected. In a process in which the first band 150 and the second band 160 are cured, the frame 110 may be coupled to the first band 150 and the second band 160, and the display 120 may also be coupled to the first band 150 and the second band 160. Although it has been described that the first band 150 and the second band 160 are coupled to the frame 110 and the display 120 after assembly of the frame 110 and the display 120, it is not limited thereto. For example, the first band 150 and the second band 160 may be coupled to the frame 110 through an injection process. The display 120 may be attached to the frame 110 to which the first band 150 and the second band 160 are coupled.

To maintain waterproofing between the display 120 and the frame 110, the frame 110 may be attached to the first portion 120a of the display 120, and the first band 150 and the second band 160 may be coupled to the frame 110 and the display 120 through an injection process.

After coupling of the display 120, the frame 110, the first band 150, and the second band 160, electrical components may be assembled into an interior of the frame 110. The display 120 may be disposed on the integrally formed frame 110, first band 150, and second band 160, thereby providing a continuous surface.

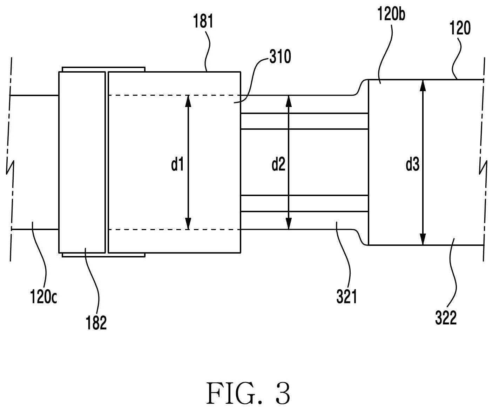

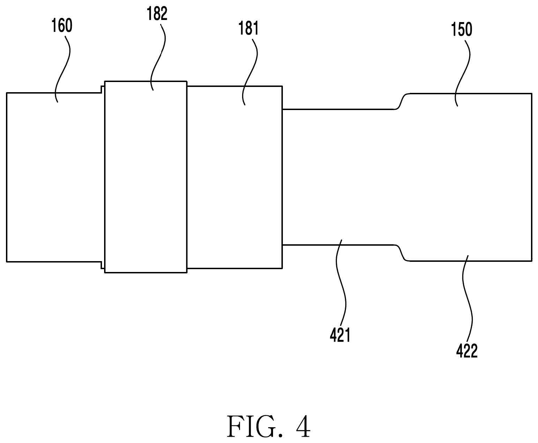

FIGS. 3 and 4 are drawings illustrating a fixing member coupled to a band.

Referring to FIGS. 3 and 4, a first fixing member 181 may be connected to a second portion 120b, and a second fixing member 182 may be connected to a third portion 120c. FIG. 3 may illustrate a surface of the first fixing member 181 and the second fixing member 182 facing outward when an electronic device 100 is worn by a user, and FIG. 4 may illustrate a surface of the first fixing member 181 and the second fixing member 182 facing a body of the user when the electronic device 100 is worn by the user.

The first fixing member 181 may be connected to the second portion 120b of the display 120 and/or a first band 150. The second portion 120b of the display 120 and the first band 150 coupled to the second portion 120b may be rolled into the first fixing member 181. A portion 321 of the second portion 120b of the display 120 and the first band 150 may be wound into the first fixing member 181 or may move from the interior of the first fixing member 181 to an exterior by an actuator (e.g., the actuator 210 of FIG. 2).

The first fixing member 181 may be at least partially transparent. For example, a portion of the first fixing member 181 contacting the body of the user may include an opaque material, and a remaining portion of the first fixing member 181 may include a transparent material. However, it is not limited thereto, and an entirety of the first fixing member 181 may be formed of a transparent material. For example, the first fixing member 181 may include an injection-moldable material or a polymer (e.g., polycarbonate (PC)) material. For example, the remaining portion of the first fixing member 181 may be a portion of an outer circumference formed as the first band 150 and the second band 160 are coupled. The remaining portion of the first fixing member 181 may be a direction toward which a displayable portion of the display 120 faces. The first fixing member 181 may be configured to accommodate the displayable portion of the flexible display 120. The displayable portion may expand a display portion of the display 120. The displayable portion may be a portion, among portions of the display 120 disposed inside the first fixing member 181, facing a portion of the first fixing member 181 including the transparent material. The displayable portion inside the first fixing member 181 may provide visual information to an exterior (e.g., an exterior of the first fixing member 181 or a field of view of the user) through the transparent material portion of the first fixing member 181.

The first fixing member 181 may include a first opening 310 such that the display 120 or the first band 150 moves to an interior or to the exterior of the first fixing member 181. The first opening 310 may be a movement path of the first band 150 and the second portion 120b of the display 120. The display 120 or the first band 150 may provide a structure operating as a stopper to limit a range in which the second portion 120b of the display 120 is rolled into the first fixing member 181. For example, the second portion 120b of the display 120 may include a narrow portion 321 and a wide remaining portion 322. The first band 150 may include a narrow portion 421 and a wide remaining portion 422. The portion 321 of the second portion 120b of the display 120 may correspond to the portion 421 of the first band 150. When the portion 321 is viewed from above, the portion 321 of the second portion 120b of the display 120 may overlap the portion 421 of the first band 150. The remaining portion 322 of the second portion 120b of the display 120 may correspond to the remaining portion 422 of the first band 150. When the remaining portion 322 is viewed from above, the remaining portion 322 of the second portion 120b of the display 120 may overlap the remaining portion 422 of the first band 150.

A width d2 of the portion 421 of the first band 150 or the portion 321 of the second portion 120b of the display 120 may be narrower than a width d1 of the first opening 310. The portion 421 of the first band 150 or the portion 321 of the second portion 120b, which is narrower than the width d1 of the first opening 310, may move into the interior of the first fixing member 181 or may move from the interior of the first fixing member 181 to the exterior.

A width d3 of the remaining portion 422 or 322 of the first band 150 or the remaining portion 422 of the display 120 may be wider than the width d2 of the portion 421 or 321 of the first band 150 or the portion 321 of the second portion 120b of the display 120, and may be wider than the width d1 of the first opening 310. The remaining portion 322 of the second portion 120b and the remaining portion 422 of the first band 150, which are wider than the width d1 of the first opening 310, may be limited from moving into the interior of the first fixing member 181. For example, while the display 120 and the first band 150 are rolled into the first fixing member 181, when the remaining portion 322 of the second portion 120b and the remaining portion 422 of the first band 150 contact the first fixing member 181, movement of the display 120 and the first band 150 may stop.

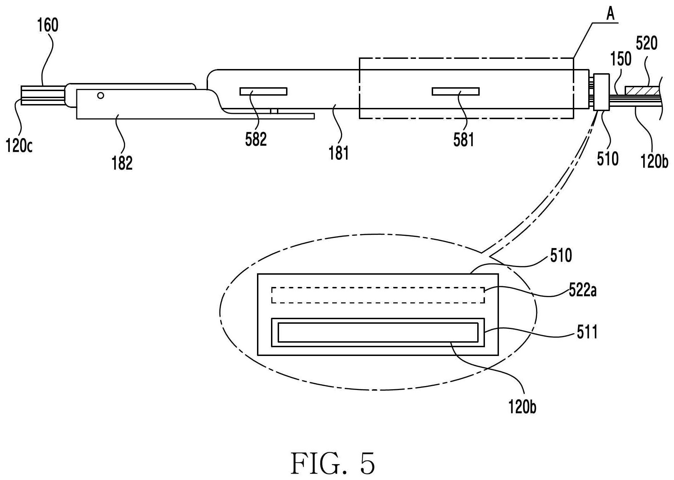

FIG. 5 illustrates a structure of fixing members. FIG. 6 schematically illustrates an internal structure of a fixing member.

Referring to FIG. 5 and FIG. 6, a first fixing member 181 connected to a second portion 120b of a display 120 or to a first band 150 may include a device for receiving an input requesting slide-in or slide-out of the display 120. For example, a structure for an input or input members 581 and 582 may be disposed on a side surface of the first fixing member 181. The input members 581 and 582 may be externally clicked in a button form. The pressed input members 581 and 582 may press a structure or mechanism (e.g., a tact switch) disposed inside, and may transmit an input signal to a processor or an actuator (e.g., the actuator 210 of FIG. 2). The input members 581 and 582 may include a touch sensor. As a touch of an external object is identified, the input members 581 and 582 may transmit an input signal to the processor or the actuator based on sensing data. The input signal may include a signal requesting an operation of the actuator.

Electrical components for controlling the actuator 210 may be included inside the first fixing member 181. An electronic device 100 may further include a substrate 601, a processor 602, memory 603, and/or a battery 620 inside the first fixing member 181. The substrate 601 may be disposed inside the first fixing member 181. The processor 602 and/or the memory 603 may be disposed on the substrate 601 within the first fixing member 181. Another electronic component may be disposed on the substrate 601. The other electronic component may include wireless communication circuitry for communication with a frame (e.g., the frame 110 of FIG. 1A) or circuitry for managing power of the battery 620. The processor 602 may be configured to control driving of a motor 611. The memory 603 may store instructions related to operation of the electronic device 100 while the electronic device 100 operates.

The actuator 210 may include the motor 611, a shaft 612, a first gear 613-1, and/or a second gear 613-2. The motor 611 may transmit rotational force to the shaft 612. The shaft 612 may be a rotation axis of the motor 611 or may be connected to the rotation axis. As the shaft 612 rotates, the first gear 613-1 may rotate. As the first gear 613-1 rotates, the second gear 613-2 engaged with the first gear 613-1 may rotate. The first gear 613-1 and the second gear 613-2 may include a worm gear or a bevel gear. The first gear 613-1 may be configured to rotate about the rotation axis, and the second gear 613-2 may be configured to rotate about a virtual axis extending in a direction perpendicular to the rotation axis. As the second gear 613-2 rotates, a pinion gear coaxially connected to the second gear 613-2 may rotate and transmit power to a rack gear disposed on an inner surface of the display 120. The display 120 may be moved based on the power transmitted through the rack gear.

A portion 321 of the second portion 120b of the display 120 may be wound inside the first fixing member 181. The second portion 120b of the display 120 may extend into the interior the first fixing member 181 through a first opening 310, bend along an outer circumferential surface of the gear 613-1 inside the first fixing member 181, and extend toward an exterior of the first fixing member 181 through a second opening 610. A stopper structure (e.g., a first stopper 510 or a second stopper 520) may be disposed at the exterior of the first fixing member 181 among the second portion 120b of the display 120. The first stopper 510 may limit an increase in a display area of a portion among the display 120 wound around a body part of a user. The first stopper 510 may be coupled to the first band 150 or to an end portion of the second portion 120b of the display 120. The first stopper 510 may include a structure 522a to which the end portion of the second portion 120b of the display 120 is fixed. The structure 522a may be a groove into which the end portion of the second portion 120b is inserted. While the display area of the second portion 120b of the display 120 increases, the second portion 120b of the display 120 may move to the exterior of the first fixing member 181 through the first opening 310. By an amount that the second portion 120b of the display 120 moves to the exterior of the first fixing member 181 through the first opening 310, the second portion 120b of the display 120 may move into the interior of the first fixing member 181 through the second opening 610. The first stopper 510 may limit movement of the end portion of the second portion 120b of the display 120 into the interior of the first fixing member 181. While the end portion of the second portion 120b of the display 120 moves toward the second opening 610, the first stopper 510 may contact the second opening 610. The first stopper 510 contacting the second opening 610 may limit movement of the display 120. The first stopper 510 may limit expansion of the display area of the second portion 120b of the display 120 through the first opening 310.

The first stopper 510 may further include a hole 511 that moves when the display area of the second portion 120b of the display 120 is expanded or reduced. The hole 511 may guide movement of the second portion 120b of the display 120. Although the first stopper 510 has been described as further including the hole 511, the hole 511 may be omitted.

The second stopper 520 may limit reduction of the display area of the portion among the display 120 wound around the body part of the user. The second stopper 520 may be a layer disposed on a rear surface of the display 120 or on a rear surface of the first band 150 (e.g., a surface facing a body part of a user when worn). The second stopper 520 may increase a sum of thicknesses of the first band 150 and the display 120, thereby limiting the second portion 120b from moving into the interior of the first fixing member 181 while the display area of the second portion 120b of the display 120 is reduced.

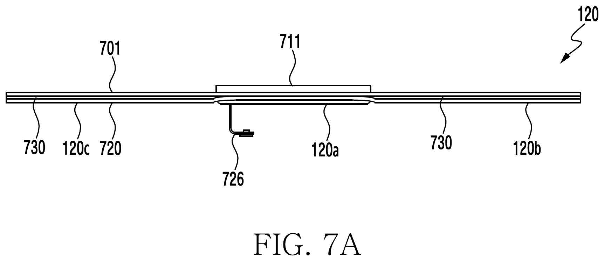

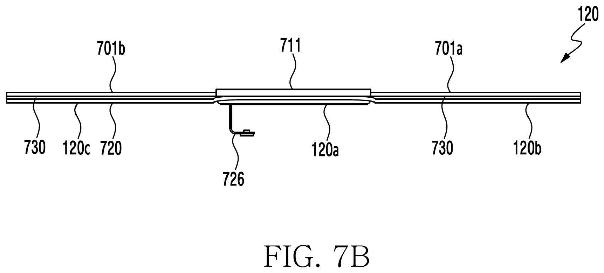

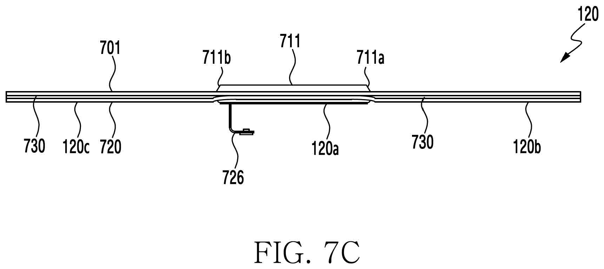

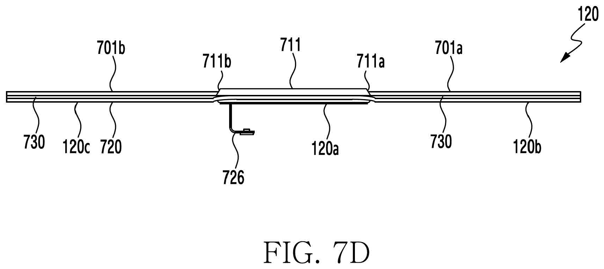

FIGS. 7A, 7B, 7C, and 7D illustrate a structure of an exemplary front plate attached on a display.

Referring to FIGS. 7A, 7B, 7C, and 7D, a display 120 may include a display panel 720, plates 701 and 711, and an adhesive member 730. The plates 701 and 711 may be disposed on the display panel 720. The plates 701 and 711 may include a transparent material configured to transmit light emitted from the display panel 720 to an exterior. The plates 701 and 711 may be referred to as a window in terms of transmitting light emitted from the display panel 720 to the exterior. Each of the plates 701 and 711 may be represented as a layer forming layers configuring the window. The transparent material may include glass or a polymer material. For example, the plates 701 and 711 may include glass, sapphire glass, or ultra thin glass (UTG). When a user wears an electronic device 100, a first portion 120a of the display 120 disposed on a frame (e.g., the frame 110 of FIG. 1A) facing the same direction as a direction toward which a back of a hand of the user faces may be exposed to frequent external impacts. A first portion of the plates 701 and 711 disposed on the first portion 120a may require high strength. A thickness of the first portion of the plate disposed on the first portion 120a of the display 120 may be thicker than thicknesses of a second portion and a third portion of the plate disposed on a second portion 120b and a third portion 120c of the display 120. The plates 701 and 711 may be referred to as layers in terms of being stacked on the display panel 720.

The adhesive member 730 may be disposed between the display panel 720 and the plates 701 and 711. The adhesive member 730 may couple the display panel 720 and the plates 701 and 711.

The display panel 720 may be connected to an electrical component disposed within the frame 110 through a flexible printed circuit board (FPCB) 726 extending toward the frame 110.

Referring to FIG. 7A, the plates 701 and 711 may include a first plate 701 and a second plate 711. The first plate 701 may be disposed on the display panel 720. The first plate 701 may be attached to the display panel 720 through the adhesive member 730. The first plate 701 may be formed of a deformable material. For example, the first plate 701 may include ultra thin glass (UTG) formed thin to be deformable or a polymer material (e.g., polyimide (PI), polycarbonate (PC), or polyethylene (PET)). The second plate 711 may include a glass material thicker than the first plate 701. For example, the second plate 711 may include sapphire glass. Rigidity of the second plate 711 may be greater than rigidity of the first plate 701. The second plate 711 may have scratch resistance. The second plate 711 may maintain its shape without being deformed. The second plate 711 may form the first portion 120a of the display 120 disposed on the frame 110. The second plate 711 may be disposed on the first plate 701. The second plate 711 may be bonded to the first plate 701. For example, the second plate 711 may be bonded (e.g., sapphire glass bonding) to the first plate 701, or the second plate 711 may be attached to the first plate 701 by being thermal compression.

Referring to FIG. 7B, the first plate 701 may include a first portion 701a and a second portion 701b. The first portion 701a of the first plate 701 may form the second portion 120b of the display 120, and the second portion 701b of the first plate 701 may form the third portion 120c of the display 120. The second plate 711 may be disposed between the first portion 701a of the first plate 701 and the second portion 701b of the first plate 701. For example, a side surface of the second plate 711 may be bonded to the first portion 701a, and another side surface of the second plate 711 may be bonded to the second portion 701b.

Referring to FIGS. 7C and 7D, a side surface of the second plate 711 disposed on the first portion 120a of the display 120 may be chamfered toward an outer surface (e.g., a side surface) of the second plate 711. For example, the side surface of the second plate 711 may extend obliquely toward the first plate 701 or the display panel 720. For example, the side surface of the second plate 711 may have an inclination with respect to the first plate 701 or the display panel 720. The inclination may be approximately 20 degrees to 80 degrees. Although the side surface of the second plate 711 has been described as being chamfered, it is not limited thereto and may be rounded.

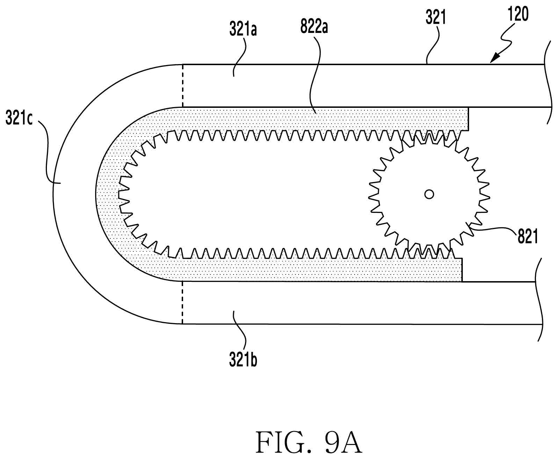

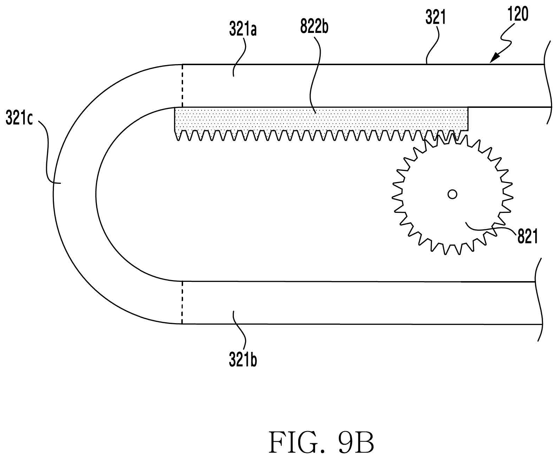

FIG. 8 schematically illustrates a power transmission structure disposed within a fixing member. FIGS. 9A and 9B illustrate gears configuring an exemplary power transmission structure.

Referring to FIG. 8, an actuator 210 may be disposed within a first fixing member 181. The actuator 210 may include a motor 611, a first shaft 612, a battery 620, a first gear 811a, a second gear 811b, a pinion gear 821, or a rack gear 822. The actuator 210 may omit some of the components and may further include another component. The actuator 210 may convert rotational motion provided based on electrical energy into linear motion to slide the display 120 into the first fixing member 181 or slide the display 120 to an exterior of the first fixing member 181.

The motor 611 may generate kinetic energy (e.g., rotational force) based on electrical energy transmitted from the battery 620. The motor 611 may rotate the first shaft 612 or stop the first shaft 612 in response to receiving a signal. The signal may be a signal input from input members (e.g., the input members 581 and 582 of FIG. 5) or a signal requested from other components (e.g., the processor 602) of the electronic device 100.

The first gear 811a connected to the shaft 612, which is coaxial with a rotation axis of the motor 611, may rotate together with the first shaft 612. The second gear 811b engaged with the first gear 811a may rotate based on rotation of the first gear 811a. The second gear 811b may be configured to rotate the pinion gear 821. For example, the second gear 811b may be coupled to an end of a second shaft 812, and the pinion gear 821 may be coupled to another end of the second shaft 812. As the second gear 811b rotates, the pinion gear 821 may rotate. The pinion gear 821 may engage with the rack gear 822. The rack gear 822 engaged with the pinion gear 821 may perform linear motion according to rotation of the pinion gear 821. The rack gear 822 may be disposed at a second portion 120b of the display 120. The rack gear 822 may be fixed to an inner surface of the second portion 120b of the display 120. The rack gear 822 may be fixed to the inner surface of the second portion 120b of the display 120 by adhesion or bonding. A portion 321 among the second portion 120b of the display 120 may move into an interior of the first fixing member 181 or to an exterior of the first fixing member 181 according to linear motion of the rack gear 822. The actuator 210 may further include transmission gears 820a for adjusting a rotational speed of the motor. The transmission gears 820a may be coupled to the first shaft 612 of the motor 611. The transmission gears coupled to the first shaft 612 of the motor 611 may change a rotational speed output through the motor 611 from a first speed to a second speed. For example, the rotational speed of the motor 611 may be the first speed, and a rotational speed of the first gear 811a coupled to an end portion of the shaft 612 of the motor may be the second speed. The transmission gears 820a may be formed as one component, which may be a reducer. According to an embodiment, the transmission gears 820a may be coupled to the second shaft 812. The transmission gears coupled to the second shaft 812 may change a rotational speed output through the first gear 811a and the second gear 811b from a first speed to a second speed. For example, the rotational speed output through the motor 611 or a rotational speed of the second shaft 812 may be the first speed, and a rotational speed of the pinion gear 821 coupled to the second shaft may be the second speed. Referring to FIGS. 9A and 9B, a portion 321 of the display 120 may be deformed. In the portion 321, a first region 321a and a second region 321b may be maintained flat, and a third region 321c may be maintained bent. The first region 321a, the second region 321b, and the third region 321c are not fixed regions but may change according to a deformed shape of the display 120. For example, when the first region 321a moves leftward and bends, a portion of the first region 321a may change into the third region 321c. When the third region 321c moves rightward as the pinion gear 821 rotates counterclockwise, at least a portion of the third region 321c may change into the first region 321a. The electronic device 100 may further include a guide member disposed within the first fixing member 181 to guide the shape of the display 120.

The rack gear 822 may be disposed on the inner surface of the display 120 and may be a rack gear 822a having a flexible material such that its shape is deformable. The rack gear 822a having a flexible material may be deformed according to deformation of the portion 321 of the display 120. A portion of the rack gear 822a having flexibility may be positioned in the third region 321c. As the rack gear 822a having flexibility may change in shape, a stroke or movement range of the rack gear 822a within a narrow region may be increased.

A rack gear 822b having rigidity may be disposed in the first region 321a or the second region 321b. The rack gear 822b having rigidity disposed in the first region 321a (or the second region 321b) may be limited in movement when reaching a boundary between the first region 321a (or the second region 321b) and the third region 321c while moving according to rotation of the pinion gear 821. The rack gear 822b having rigidity may reduce damage caused by friction between the pinion gear 821 and the rack gear 822b.

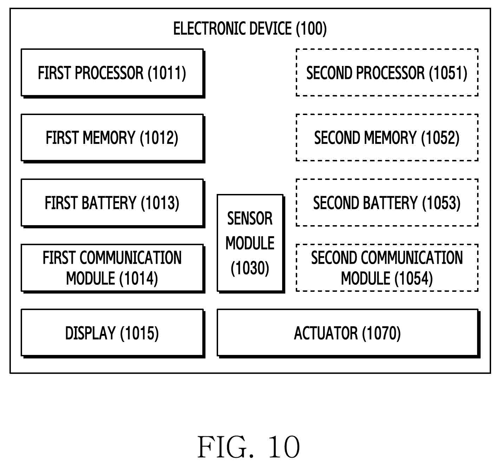

FIG. 10 is a block diagram of an exemplary electronic device.

Referring to FIG. 10, an electronic device 100 may include a first processor 1011, first memory 1012, a first battery 1013, a first communication module 1014, a display 1015, a sensor module 1030, and/or an actuator 1070. The first processor 1011, the first memory 1012, the first battery 1013, the first communication module 1014, the display 1015, the sensor module 1030, and/or the actuator 1070 may be electronically and/or operably connected with each other by an electronical component such as a communication bus. A type and/or the number of hardware components included in the electronic device 100 are not limited to those illustrated in FIG. 10. For example, the electronic device 100 may include only some of the hardware components illustrated in FIG. 10.

The first processor 1011 may include hardware components for processing data based on one or more instructions. The hardware components for processing data may include, for example, an Arithmetic and Logic Unit (ALU), a Field Programmable Gate Array (FPGA), and/or a Central Processing Unit (CPU). The number of first processors 1011 may be one or more. For example, the first processor 1011 may have a structure of a multi-core processor such as a dual-core, a quad-core, or a hexa-core.

The memory 1012 may include a hardware component for storing data and/or instructions input to and/or output from the first processor 1011. The memory 1012 may include, for example, a volatile memory such as a Random-Access Memory (RAM) and/or a non-volatile memory such as a Read-Only Memory (ROM). The volatile memory may include, for example, at least one of a Dynamic RAM (DRAM), a Static RAM (SRAM), a Cache RAM, or a PSRAM. The non-volatile memory may include, for example, at least one of a Programmable ROM (PROM), an Erasable PROM (EPROM), an Electrically Erasable PROM (EEPROM), a flash memory, a hard disk, a compact disk, or an Embedded Multi Media Card (eMMC).

Within the first memory 1012, one or more instructions indicating an operation to be performed on data by the first processor 1011 may be stored. A set of instructions may be referred to as firmware, an operating system, a process, a routine, a sub-routine, and/or an application.

The first battery 1013 of the electronic device 100 according to an embodiment may supply electrical energy to hardware components included in the electronic device 100. For example, the first battery 1013 may include a battery such as a lithium-ion secondary battery. The electronic device 100 may include a port (e.g., a USB-C type port), a plug, and/or a transformer for receiving electrical energy from a power distribution system such as a concentric plug for charging the first battery 1013. The electronic device 100 may further include a wireless charging module for charging the first battery 1013. The electronic device 100 may include hardware components for obtaining electrical energy from non-electrical energy such as a solar cell and/or a hydrogen cell.

The first communication module 1014 of the electronic device 100 may include hardware components for supporting transmission and/or reception of an electrical signal between the electronic device 100 and an external electronic device. The first communication module 1014 may include, for example, at least one of a modem, an antenna, or an optic/electronic (O/E) converter. The first communication module 1014 may support transmission and/or reception of an electrical signal based on various types of protocols such as Ethernet, a Local Area Network (LAN), a Wide Area Network (WAN), Wireless Fidelity (WiFi), Bluetooth, Bluetooth Low Energy (BLE), ZigBee, Long Term Evolution (LTE), and 5G New Radio (NR). The first communication module 1014 may also support transmission and/or reception of an electrical signal with a second communication module 1054 in the electronic device 100. The first communication module 1014 and the second communication module 1054 may be connected by wire or wirelessly.

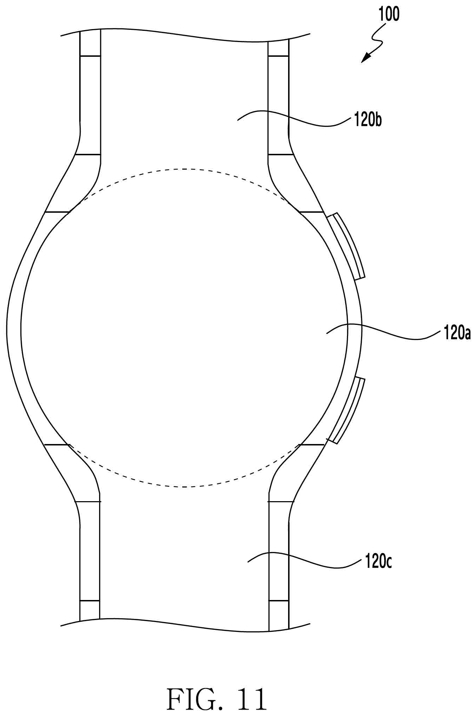

The display 1015 may output visualized information (e.g., at least one of screens of FIG. 11, FIG. 12, FIG. 14B, and/or FIG. 17) to a user. For example, the display 1015 may be controlled by a controller such as the first processor 1011 to output visualized information to the user. The display 1015 may include a Flat Panel Display (FPD) and/or electronic paper. The FPD may include a Liquid Crystal Display (LCD), a Plasma Display Panel (PDP), and/or one or more Light Emitting Diodes (LEDs). The LED may include an Organic LED (OLED). The display 1015 may include a rigid display whose shape does not change and a flexible display whose shape is deformable. For example, when the electronic device 100 is worn by the user, the display 1015 including the flexible display may be deformed to correspond to a shape of a body part of the user surrounded by the electronic device 100.

The display 1015 of the electronic device 100 may include a sensor (e.g., a touch sensor panel (TSP)) for detecting an external object (e.g., a finger of the user) on the display 1015. For example, based on the TSP, the electronic device 100 may detect an external object that is in contact with the display 1015 or floating above the display 1015.

The sensor module 1030 may generate electronic information that may be processed by the first processor 1011 and/or the first memory 1012 from non-electronic information related to the electronic device 100. For example, the sensor module 1030 may include a Hall sensor to identify a position of the display 120 within a first fixing member 181. Through the Hall sensor, information indicating magnetic force of a magnet disposed adjacent to the display 120 may be generated. The information may be stored in the first memory 1012, processed by the first processor 1011, or transmitted to the second communication module 1054 through the first communication module 1014. The sensor module 1030 is not limited to the above description and may include an image sensor, an illuminance sensor, and/or a Time of Flight (ToF) sensor for detecting electromagnetic waves including light.

The actuator 1070 may convert an electrical signal into kinetic energy. The actuator 1070 may be configured to move a component inside the electronic device 100 (e.g., the display 1015). The actuator 1070 may include hardware for generating power such as a motor and may include hardware for transmitting power such as a gear or a shaft connected to a gear.

The electronic device 100 may further include a second processor 1051, second memory 1052, a second battery 1053, and/or a second communication module 1054. The second processor 1051, the second memory 1052, the second battery 1053, and/or the second communication module 1054 may be disposed within the first fixing member 181 (e.g., the first fixing member 181 of FIG. 1B). The second processor 1051, the second memory 1052, the second battery 1053, and/or the second communication module 1054 may be configured to operate the actuator 1070. When the first processor 1011, the first memory 1012, the first battery 1013, and the first communication module 1014 disposed within a frame 110 (e.g., the frame 110 of FIG. 1A) are electronically connected to the actuator 1070 disposed within the first fixing member 181 (e.g., the first fixing member 181 of FIG. 1B), at least one of the second processor 1051, the second memory 1052, the second battery 1053, and/or the second communication module 1054 may be omitted.

The first processor 1011, the first memory 1012, the first battery 1013, and the first communication module 1014 may be configured to be connected to the actuator 1070 through a wire disposed within a first band 150. For example, the first processor 1011, the first memory 1012, the first battery 1013, and/or the first communication module 1014 may be connected to the actuator 1070 through a wire within a display (e.g., the second portion 120b of the display 120 of FIG. 1A) disposed on the first band 150. For example, the wire may be implemented as a conductive pattern on a lattice structure in the second portion 120b. The lattice structure may include a pattern of repetitive openings for bending of the second portion 120b of the display 120. The conductive pattern may be formed in a pattern corresponding to the pattern of the lattice structure and may be integrally formed with the lattice structure. Within the frame 110, the conductive pattern may be connected to at least one of the first processor 1011, the first memory 1012, the first battery 1013, and/or the first communication module 1014, and may be connected to the actuator 1070 within the first fixing member 181.

The second processor 1051, the second memory 1052, the second battery 1053, and the second communication module 1054 may be substantially the same as or similar to the first processor 1011, the first memory 1012, the first battery 1013, and the first communication module 1014. Descriptions of functions of the second processor 1051, the second memory 1052, the second battery 1053, and the second communication module 1054 that are the same as or similar to functions of the first processor 1011, the first memory 1012, the first battery 1013, and/or the first communication module 1014 are omitted.

The second processor 1051 may receive sensing data measured through the sensor module 1030 to control the actuator 1070. Based on the sensing data, the second processor 1051 may drive the actuator 1070 or cause the operating actuator 1070 to stop. Based on an input signal received from input members (e.g., the input members 581 and 582 of FIG. 5), the second processor 1051 may drive the actuator 1070 or cause the operating actuator 1070 to stop. The second memory 1052 may include instructions for controlling operation of the actuator 1070 when the second processor 1051 operates. The second battery 1053 may supply a power source required when the second processor 1051, the second memory 1052, and the second communication module 1054 operate. The second communication module 1054 may support transmission and/or reception of an electrical signal with the first communication module 1014.

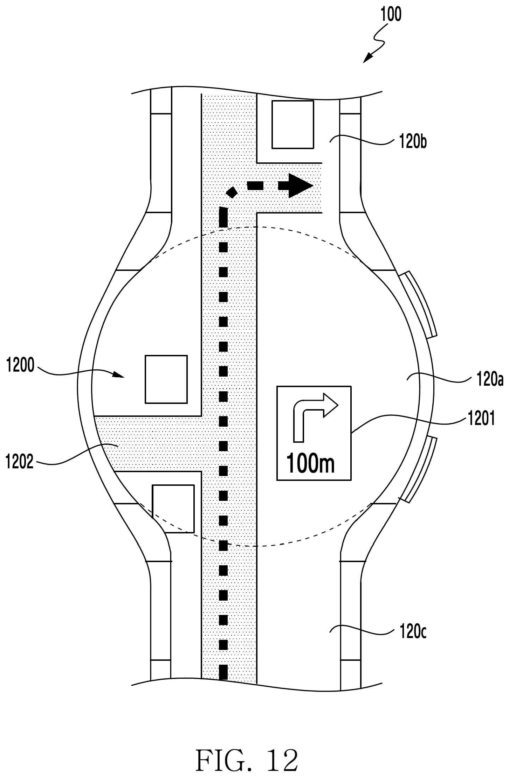

FIG. 11 is a plan view illustrating a front surface of a display panel. FIG. 12 illustrates an example of utilization of a display disposed on a band.

Referring to FIG. 11 and FIG. 12, a display 120 of an electronic device 100 may include a first portion 120a, a second portion 120b, and a third portion 120c. The first portion 120a may be a portion disposed on a frame 110 (e.g., the frame 110 of FIG. 1A). The second portion 120b may be a portion disposed on a first band (e.g., the first band 150 of FIG. 1B). The third portion 120c may be a portion disposed on a second band (e.g., the second band 160 of FIG. 1B). The second portion 120b and the third portion 120c may be portions disposed on the first band 150 and the second band 160 having flexibility, and may be bendable portions.

The display 120 may be configured to transmit image information to an exterior through the first portion 120a disposed on the frame 110. When a size of an image 1200 is greater than the first portion 120a, or when a vertical length of the image 1200 is long (i.e., a vertical resolution of the image 1200 is large), the display 120 may display the image 1200 through the first portion 120a, the second portion 120b, and the third portion 120c. The display 120 may display an image on a portion facing a user among the first portion 120a, the second portion 120b, and the third portion 120c. For example, based on information obtained through a gyro sensor or a six-axis sensor of a sensor module (e.g., the sensor module 1030 of FIG. 10) in the electronic device 100, and further based on a determination that a surface facing upward (e.g., a direction opposite to gravity) among portions of the display 120 is the second portion 120b, a display 1015 may display the image on the second portion 120b. In this case, the first portion 120a and the third portion 120c of the display 120 may be black-processed. The black-processing may represent the image displayed through the first portion 120a and the third portion 120c of the display 120 in black color. The black-processing may turn off pixels disposed in the first portion 120a and the third portion 120c among pixels configuring the display 120. The display 120 may include semiconductor circuitry (e.g., switching circuitry or a thin film transistor (TFT)) configured to control driving of individual pixels, and the individual pixels may be connected to the semiconductor circuitry.

Referring to FIG. 12, among the image 1200 displayed on the display 120, a background image 1202 may be displayed on the first portion 120a, the second portion 120b, and the third portion 120c. Among the image 1200 displayed on the display 120, a visual object 1201 transmitting information may be displayed on the first portion 120a. According to an embodiment, based on information obtained through a gyro sensor or a six-axis sensor of a sensor module (e.g., the sensor module 1030 of FIG. 10) in the electronic device 100, and further based on a determination that a surface facing upward (e.g., the direction opposite to gravity) among the portions of the display 120 is the second portion 120b, the display 1015 may display the visual object 1201 on the second portion 120b.

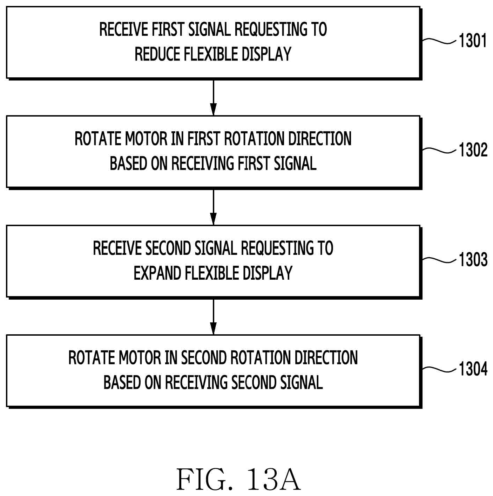

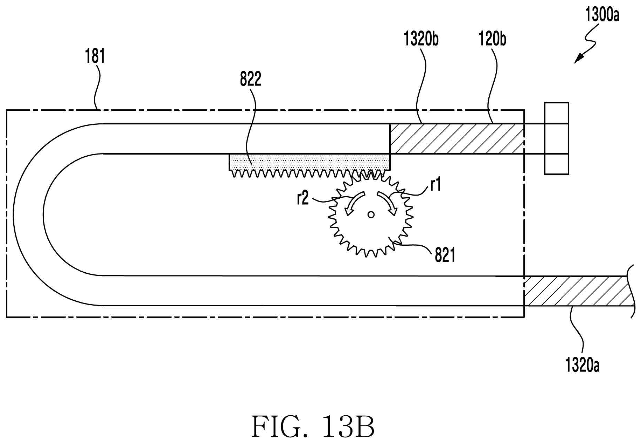

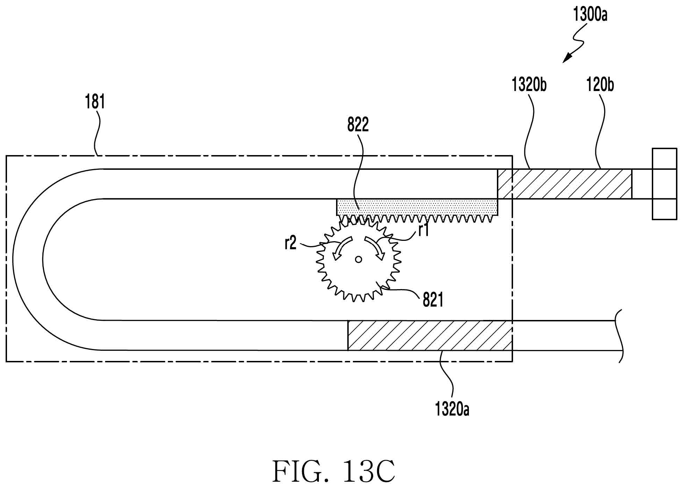

FIG. 13A is a flowchart illustrating an operation for a change in state of a display. FIGS. 13B and 13C illustrate examples of deformation of the display.

In operation 1301, instructions stored in memory may, when a processor (e.g., the first processor 1011 or the second processor 1051 of FIG. 10) operates, cause an electronic device 100 to receive a first signal requesting to reduce a flexible display (e.g., a display 120). Reducing the flexible display may mean moving (or sliding) a second portion 120b (e.g., the second portion 120b of FIG. 2) of the display 120 to an interior of a first fixing member (e.g., the first fixing member 181 of FIG. 1B). The first signal requesting to reduce the display 120 may be a signal input through an input device including input members 581 and 582 disposed on the first fixing member 181. For example, an electrical signal generated by touching or clicking at least one of the input members 581 and 582 may be transmitted to the first processor 1011 or the second processor 1051. The first signal requesting to reduce the display 120 may be data about a biological signal obtained through a biological sensor (e.g., an ECG sensor, a heart rate sensor, or a blood flow sensor) in a sensor module (e.g., the sensor module 1030 of FIG. 10).

In operation 1302, the instructions stored in the memory may, when the processor (e.g., the first processor 1011 or the second processor 1051 of FIG. 10) operates, cause the electronic device 100 to rotate a motor in a first rotation direction based on receiving the first signal. Based on the first processor 1011 receiving the first signal, the first processor 1011 may control the motor to rotate in the first rotation direction. Based on receiving the first signal, the first processor 1011 may transmit a signal to the second processor 1051 requesting control of the motor to rotate in the first rotation direction. Based on the second processor 1051 receiving the first signal from the biological sensor or the input device, or based on receiving from the first processor 1011 the signal requesting control of the motor to rotate in the first rotation direction, the second processor 1051 may control the motor to rotate in the first rotation direction.

Through the first signal obtained from the biological sensor, the processor (the first processor 1011 or the second processor 1051) may identify that a user starts (or ends) exercise based on a change in heart rate. For example, by identifying that the heart rate is higher (or lower) than a preset heart rate, the processor (the first processor 1011 or the second processor 1051) may identify that the user starts (or ends) exercise.

Referring to FIGS. 13B and 13C, when a pinion gear 821 rotated by the motor rotates in a rotation direction r1, it may be moved rightward by a rack gear 822 engaged with the pinion gear 821. By rotation of the motor, the second portion 120b of the display 120 may change from a first state 1300a in which an area for displaying visual information to the user is maximum to a second state 1300b in which the area for displaying visual information to the user is reduced. For example, in the first state 1300a, a display area 1320a disposed at an exterior of the first fixing member 181 and providing visual information may be moved to the interior of the first fixing member 181 in the second state 1300b, thereby reducing the area for displaying visual information. According to an embodiment, by rotation of the motor, a first band (e.g., the first band 150 of FIG. 1B) may be wound to maintain a tight fit between the electronic device and the user.

Referring back to FIG. 13A, in operation 1303, the instructions stored in the memory may, when the processor operates, cause the electronic device 100 to receive a second signal requesting to expand the flexible display. Expanding the flexible display may mean moving (or sliding) the second portion 120b (e.g., the second portion 120b of FIG. 2) of the display 120 from the first fixing member (e.g., the first fixing member 181 of FIG. 1B) to the exterior. The second signal requesting to expand the display 120 may be a signal input through the input device including the input members 581 and 582 disposed on the first fixing member 181. For example, an electrical signal generated by touching or clicking at least one of the input members 581 and 582 may be transmitted to the first processor 1011 or the second processor 1051. The second signal requesting to expand the display 120 may be data about a biological signal obtained through the biological sensor in the sensor module (e.g., the sensor module 1030 of FIG. 10).

In operation 1304, the instructions stored in the memory may, when the processor operates, cause the electronic device 100 to rotate the motor in a second rotation direction based on receiving the second signal. Based on the first processor 1011 receiving the second signal, the first processor 1011 may control the motor to rotate in the second rotation direction. Based on receiving the second signal, the first processor 1011 may transmit a signal to the second processor 1051 requesting control of the motor to rotate in the second rotation direction. Based on the second processor 1051 receiving the second signal from the biological sensor or the input device, or based on receiving from the first processor 1011 the signal requesting control of the motor to rotate in the second rotation direction, the second processor 1051 may control the motor to rotate in the second rotation direction.

Through the second signal obtained from the biological sensor, the processor (the first processor 1011 or the second processor 1051) may identify that a user ends (or starts) exercise based on a change in heart rate. For example, by identifying that the heart rate is lower (higher) than a preset heart rate, the processor (the first processor 1011 or the second processor 1051) may identify that the user ends (or starts) exercise.

Referring to FIGS. 13B and 13C, when the pinion gear 821 rotated by the motor rotates in a rotation direction r2, it may be moved leftward by the rack gear 822 engaged with the pinion gear 821. By rotation of the motor, the second portion 120b of the display 120 may change from the second state 1300b in which an area for displaying visual information to the user is minimum to the first state 1300a in which the area for displaying visual information to the user is increased. For example, in the second state 1300b, a display area 1320a disposed inside the first fixing member 181 and not providing visual information may be moved to the exterior of the first fixing member 181 in the first state 1300a, thereby increasing the area for displaying visual information. According to an embodiment, by rotation of the motor, a first band (e.g., the first band 150 of FIG. 1B) may be wound to maintain a loose fit between the electronic device and the user.

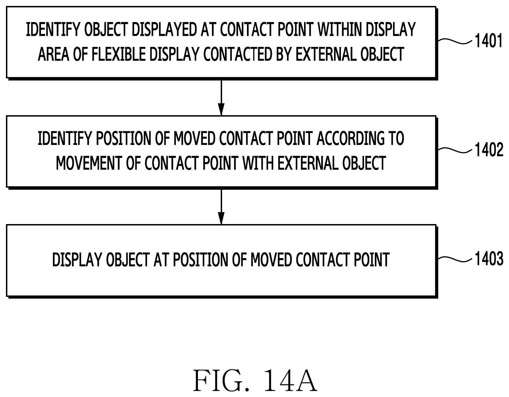

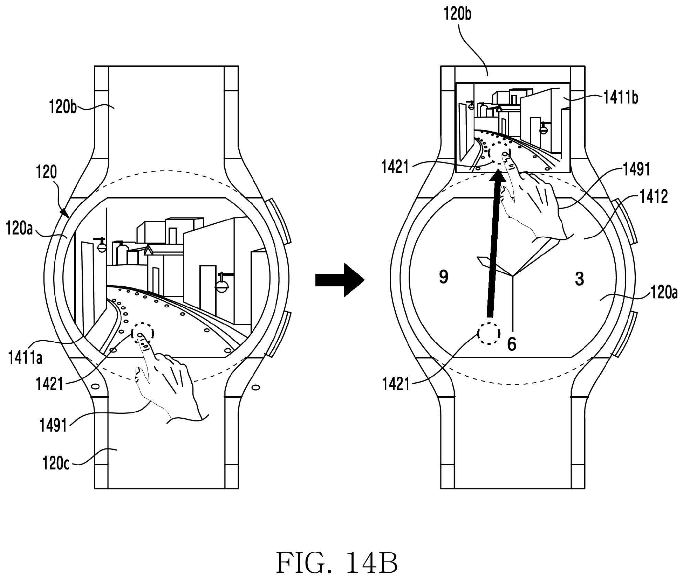

FIG. 14A is a flowchart illustrating an operation of moving an object displayed on a display area of a display. FIG. 14B is a drawing illustrating movement and transition of an object displayed on the display area of the display.

Referring to FIGS. 14A and 14B, in operation 1401, instructions stored in memory may, when a processor (e.g., the first processor 1011 of FIG. 10) operates, cause an electronic device 100 to identify an object displayed at a contact point within the display area of the flexible display contacted by an external object.

The processor (e.g., the first processor 1011) of the electronic device 100 may identify that a body part 1491 (e.g., a fingertip) of a user, which is an external object, is in contact through a touch sensor in the display. Based on a position of the contact point obtained from the touch sensor, the processor may identify an image 1411a, which is a visual object displayed in a display area on a first portion 120a. The image 1411a may be a visual object overlapping a contact point 1421.

In operation 1402, the instructions stored in the memory may, when the processor (e.g., the first processor 1011 of FIG. 10) operates, cause the electronic device 100 to identify a position of the moved contact point according to movement of the contact point with the external object. The processor (e.g., the first processor 1011) of the electronic device 100 may identify movement of the contact point 1421 between the body part 1491 and the display 120 through the touch sensor.

In operation 1403, the instructions stored in the memory may, when the processor (e.g., the first processor 1011 of FIG. 10) operates, cause the electronic device 100 to display the object at the position of the moved contact point. Based on identifying that the contact point 1421 with the body part 1491 of the user is moved to another portion other than the first portion 120a, the processor 1011 may display the image, which is the visual object, in the other portion. For example, the first processor 1011 may identify that the contact point 1421 is moved from the display area on the first portion 120a to a display area on a second portion 120b. Based on the identification, the first processor 1011 may cause the display 120 to display the image 1411a in the display area on the second portion 120b. When a size of the image 1411a is greater than a width of the display area positioned in the second portion 120b, the size of the image 1411a may be adjusted. An image 1411b whose size is adjusted may be displayed in the display area on the second portion 120b. As the image 1411b is displayed in the display area on the second portion 120b, the first processor 1011 may display another visual object 1412 in the display area on the first portion 120a. The other visual object 1412 may be an application being executed before the visual object 1411a is displayed, and may be an application or an image designated by the user.

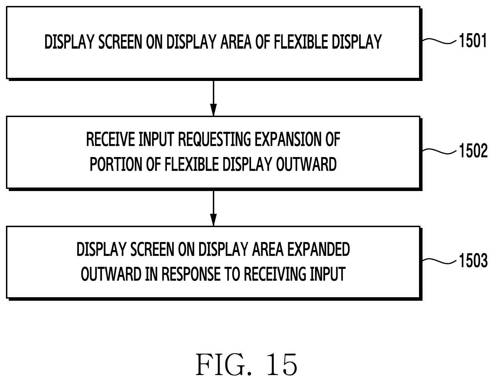

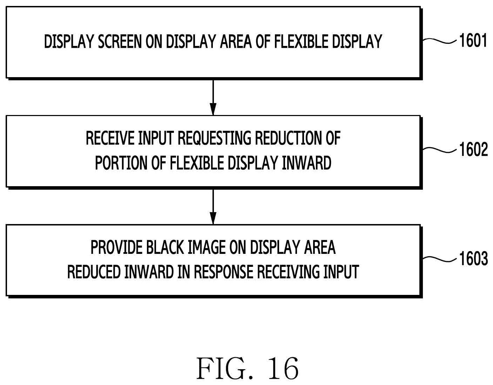

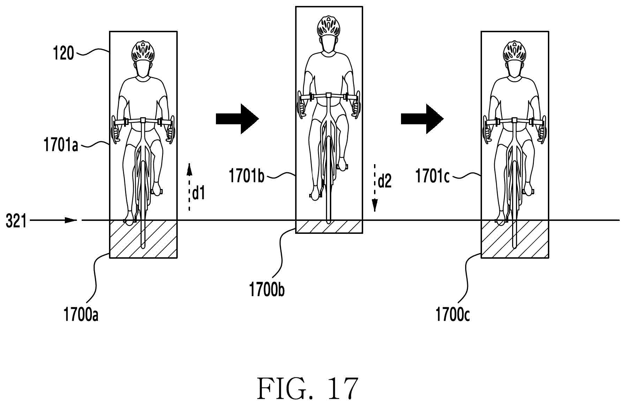

FIG. 15 is a flowchart illustrating an operation of displaying an image according to expansion of a display area of a display. FIG. 16 is a flowchart illustrating an operation of displaying an image according to reduction of a display area of a display. FIG. 17 exemplarily illustrates image display according to a change in the display area of the display.

Referring to FIG. 15 and FIG. 17, in operation 1501, instructions stored in memory may, when a processor (e.g., the first processor 1011 of FIG. 10) operates, cause an electronic device 100 to display a screen on the display area of the flexible display. In a state in which a portion 321 of a display 120 is covered by a first fixing member 181, the display 120 may display a first image 1701a in which a black image 1700a is displayed on the portion 321 covered by the first fixing member 181. The black image 1700a may include displaying black color on the display 120 and/or turning off subpixels corresponding to the portion 321 on the display 120.

In operation 1502, the instructions stored in the memory may, when the processor (e.g., first processor 1011 of FIG. 10) operates, cause the electronic device 100 to receive an input requesting to expand a portion of the flexible display outward. Based on receiving the input requesting to expand a portion of the display 120 outward, the processor 1011 may drive an actuator (e.g., the actuator 210 of FIG. 2). The input may be an input signal generated based on information obtained through sensors of the electronic device 100 or a signal input externally. The actuator 210 may move the portion 321 of the display 120 to an exterior of the first fixing member 181.

In operation 1503, the instructions stored in the memory may, when the processor (e.g., the first processor 1011 of FIG. 10) operates, cause the electronic device 100 to display the screen on the display area expanded outward in response to receiving the input.

As the portion 321 of the display 120 moves to the exterior of the first fixing member 181, a size of a black image 1700b may decrease. As the size of the black image 1700b decreases, a display area of an image 1701b may be expanded. The black image 17000b may include displaying black color on the display 120 and/or turning off subpixels covered by the first fixing member 181 among the portion 321 on the display 120.

Referring to FIG. 16 and FIG. 17, in operation 1601, instructions stored in memory may, when a processor (e.g., the first processor 1011 of FIG. 10) operates, cause an electronic device 100 to display a screen on the display area of the flexible display. A state of operation 1601 may be the same as or similar to a state of operation 1503.

In operation 1602, the instructions stored in the memory may, when the processor (e.g., the first processor 1011 of FIG. 10) operates, cause the electronic device 100 to receive an input requesting to reduce a portion of the flexible display inward. Based on receiving the input requesting to reduce a portion of the display 120 to an interior of the first fixing member 181, the processor 1011 may drive an actuator 210. The input may be an input signal generated based on information obtained through sensors of the electronic device 100 or a signal input externally. The actuator 210 may move the portion 321 of the display 120 to the interior of the first fixing member 181.

In operation 1603, the instructions stored in the memory may, when the processor (e.g., the first processor 1011 of FIG. 10) operates, cause the electronic device 100 to display a black image on the display area reduced inward in response to receiving the input. As the portion 321 of the display 120 moves to the interior of the first fixing member 181, a size of a black image 1700c may increase. As the size of the black image 1700c increases, a display area of an image 1701c may be reduced. The black image 1700c may include displaying black color on the display 120 and/or turning off subpixels covered by the first fixing member 181 among the portion 321 on the display 120.

According to an embodiment, a wearable device is intended to provide a method for expanding a display area. While expanding the display, a method for maintaining waterproofing of an electronic device is required.

The technical problems to be achieved in the present disclosure are not limited to those described above, and other technical problems not mentioned herein will be clearly understood by those having ordinary knowledge in the art to which the present disclosure belongs.

According to the above-described embodiment, a wearable device (e.g., the electronic device 100 of FIG. 1A) may comprise a frame (e.g., the frame 110 of FIG. 2). The wearable device may further comprise a first band (e.g., the first band 150 of FIG. 2). The first band may be coupled to a portion of a side surface (e.g., the side surface 110B of FIG. 2) of the frame. The wearable device may further comprise a second band (e.g., the second band 160 of FIG. 2). The second band may be coupled to a remaining portion of the side surface opposite to the portion of the side surface of the frame. The wearable device may further comprise a flexible display (e.g., the display 120 of FIG. 2). The flexible display may be disposed on a top of the frame, the first band, and the second band. The wearable device may further comprise a fixing member (e.g., the first fixing member 181 of FIG. 2). The fixing member may be disposed to an end portion of the first band, may accommodate a portion of the flexible display, and may be configured to be fastened to an end portion of the second band. The wearable device may further comprise an actuator (e.g., the actuator 210 of FIG. 2). The actuator may be disposed within the fixing member and may be configured to transmit a driving force to the flexible display. The actuator may include a motor (e.g., the motor 611 of FIG. 8), a rack gear (e.g., the rack gear 822 of FIG. 8) disposed on a surface of the flexible display, and a pinion gear (e.g., the pinion gear 821 of FIG. 8) engaged with the rack gear and receiving rotational force from the motor.

The actuator may further include a first gear (e.g., the first gear 811a of FIG. 8) coupled to a rotation axis of the motor. The actuator may further include a second gear (e.g., the second gear 811b of FIG. 8) engaged with the first gear and rotating about a rotation axis perpendicular to the rotation axis of the first gear, and a shaft (e.g., the second shaft 812 of FIG. 8) providing a rotation axis of the pinion gear and the second gear.

The wearable device may further include a stopper (e.g., the stopper 510 of FIG. 5) fixed to an end of the flexible display corresponding to the end portion of the first band, including a hole surrounding a portion of the flexible display facing the end of the flexible display, and disposed at an exterior of the fixing member.

The stopper may be configured to move toward the fixing member while a portion of the flexible display slides to an exterior of the fixing member.

The stopper may be configured to limit movement of the flexible display when the stopper is in contact with the fixing member.

The wearable device may further comprise a layer (e.g., the second stopper 520 of FIG. 5) disposed on a point of the flexible display.

The layer may be configured to limit movement of the flexible display based on contact between the layer and the fixing member, when a portion of the flexible display is inserted into the fixing member and the fixing member approaches the point.

According to an embodiment, the wearable device may further comprise a window (e.g., the plates 701 and 711 of FIG. 7A) disposed on the flexible display.

The window may include a first portion disposed on the frame, a second portion disposed on the first band and thinner than the first portion, and a third portion disposed on the second band and thinner than the first portion.

The window may further include a first layer (e.g., the first plate 701) disposed on the flexible display and a second layer (e.g., the second plate 711) disposed on a portion of the first layer corresponding to the first portion.

The wearable device may comprise memory storing instructions and a processor. The instructions, when executed by the processor, may cause the wearable device to, based on receiving a signal requesting to slide the flexible display into the fixing member, rotate the motor in a first rotation direction, and based on receiving a signal requesting to slide the flexible display to the exterior of the fixing member, rotate the motor in a second rotation direction.

According to an embodiment, the signal requesting to slide the flexible display into the fixing member may be a first signal input through an input device disposed on the fixing member. According to an embodiment, the signal requesting to slide the flexible display to the exterior of the fixing member may be a second signal input through the input device.

The signal requesting to slide the flexible display into the fixing member may be a signal generated based on first data about biological signal obtained through a sensor.

The signal requesting to slide the flexible display to the exterior of the fixing member may be a signal generated based on second data distinct from the first data about the biological signal obtained through the sensor.

The wearable device may comprise a battery. The battery may be positioned within the fixing member to drive the motor. The wearable device may comprise another wireless communication module. The another wireless communication module may be connected to the motor and may be configured to communicate with a wireless communication module within the frame. The wearable device may further comprise memory. The memory may include instructions that cause the wearable device to control the motor.

According to an embodiment, the wearable device may comprise a touch sensor disposed in the flexible display, memory storing instructions, and a processor.

The instructions, when executed by the processor, may cause the wearable device to identify an object corresponding to a contact point at which an external object contacts a display area on the frame among display areas of the flexible display, through the touch sensor.

The instructions, when executed by the processor, may cause the wearable device to move the object to a display area on the first band, based on identifying that the external object moves to the display area on the first band among the display areas of the display through the touch sensor.

The wearable device may comprise a position detection sensor disposed within the fixing member and configured to detect an extent of movement of the flexible display. The wearable device may comprise memory storing instructions and a processor.

The instructions, when executed by the processor, may cause the wearable device to limit rotation of the motor, based on sensing data obtained through the position detection sensor.

The wearable device may comprise a position detection sensor disposed in the fixing member and configured to detect a degree of movement of the flexible display, memory storing instructions, and processor.

The instructions, when executed by the processor, may cause the wearable device to display a screen on the display area of the flexible display, receive an input that causes a portion of the flexible display to move to the exterior of the fixing member, and in response to receiving the input, display an image on the display area extending outward from the fixing member.

The instructions, when executed by the processor, may cause the wearable device to receive another input causing a portion of the flexible display to move into the fixing member, and in response to receiving the another input, display a black image on the display area of the portion of the flexible display rolled into the fixing member.

A wearable device may comprise a frame with an open bottom, a plate contacting the bottom of the frame, a first band fixed to a portion of a side surface of the frame and extending from the portion of the side surface of the frame, a second band fixed to a remaining portion of the side surface of the frame and extending from the remaining portion of the side surface of the frame in a direction opposite to the first band, a flexible display disposed on a top of the frame, the first band, and the second band, a fixing member disposed to an end portion of the first band, accommodating a portion of the flexible display, and configured to be fastened to an end portion of the second band, and an actuator configured to transmit a driving force to the flexible display such that a portion of the flexible display slides out to an exterior of the fixing member or slides into the fixing member, and disposed within the fixing member. The actuator may include a shaft and a power conversion structure configured to convert rotational motion of the shaft into linear motion to move the flexible display.

A top of the frame, a surface of the first band, and a surface of the second band may form a continuous surface.

According to an embodiment, the frame includes a rigid material, and the first band and the second band may include a flexible material.

According to an embodiment, the flexible display may include a first portion disposed on the frame and configured to maintain a shape, a second portion disposed on the first band and configured to be bendable, and a third portion disposed on the second band and configured to be bendable.

According to an embodiment, while the wearable device is worn on a body part of a user, the second portion and the third portion may be configured to bend along the part of the body.

According to an embodiment, the wearable device may comprise electronic components attached to the plate and disposed within the frame.

The wearable device may comprise a first gear coupled to the shaft and a second gear disposed on a portion of the flexible display, the second gear being engaged with the first gear such that rotational motion of the first gear is converted into linear motion.

The effects that can be obtained from the present disclosure are not limited to those described above, and any other effects not mentioned herein will be clearly understood by those having ordinary knowledge in the art to which the present disclosure belongs, from the following description.

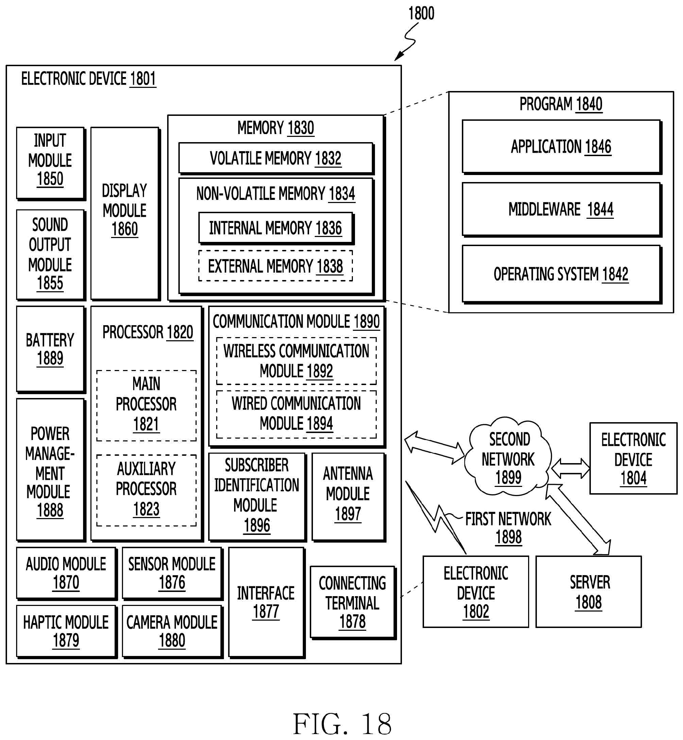

FIG. 18 is a block diagram illustrating an electronic device 1801 in a network environment 1800 according to various embodiments.

Referring to FIG. 18, the electronic device 1801 in the network environment 1800 may communicate with an electronic device 1802 via a first network 1898 (e.g., a short-range wireless communication network), or at least one of an electronic device 1804 or a server 1808 via a second network 1899 (e.g., a long-range wireless communication network). According to an embodiment, the electronic device 1801 may communicate with the electronic device 1804 via the server 1808. According to an embodiment, the electronic device 1801 may include a processor 1820, memory 1830, an input module 1850, a sound output module 1855, a display module 1860, an audio module 1870, a sensor module 1876, an interface 1877, a connecting terminal 1878, a haptic module 1879, a camera module 1880, a power management module 1888, a battery 1889, a communication module 1890, a subscriber identification module(SIM) 1896, or an antenna module 1897. In some embodiments, at least one of the components (e.g., the connecting terminal 1878) may be omitted from the electronic device 1801, or one or more other components may be added in the electronic device 1801. In some embodiments, some of the components (e.g., the sensor module 1876, the camera module 1880, or the antenna module 1897) may be implemented as a single component (e.g., the display module 1860).

The processor 1820 may execute, for example, software (e.g., a program 1840) to control at least one other component (e.g., a hardware or software component) of the electronic device 1801 coupled with the processor 1820, and may perform various data processing or computation. According to an embodiment, as at least part of the data processing or computation, the processor 1820 may store a command or data received from another component (e.g., the sensor module 1876 or the communication module 1890) in volatile memory 1832, process the command or the data stored in the volatile memory 1832, and store resulting data in non-volatile memory 1834. According to an embodiment, the processor 1820 may include a main processor 1821 (e.g., a central processing unit (CPU) or an application processor (AP)), or an auxiliary processor 1823 (e.g., a graphics processing unit (GPU), a neural processing unit (NPU), an image signal processor (ISP), a sensor hub processor, or a communication processor (CP)) that is operable independently from, or in conjunction with, the main processor 1821. For example, when the electronic device 1801 includes the main processor 1821 and the auxiliary processor 1823, the auxiliary processor 1823 may be adapted to consume less power than the main processor 1821, or to be specific to a specified function. The auxiliary processor 1823 may be implemented as separate from, or as part of the main processor 1821.

The auxiliary processor 1823 may control at least some of functions or states related to at least one component (e.g., the display module 1860, the sensor module 1876, or the communication module 1890) among the components of the electronic device 1801, instead of the main processor 1821 while the main processor 1821 is in an inactive (e.g., sleep) state, or together with the main processor 1821 while the main processor 1821 is in an active state (e.g., executing an application). According to an embodiment, the auxiliary processor 1823 (e.g., an image signal processor or a communication processor) may be implemented as part of another component (e.g., the camera module 1880 or the communication module 1890) functionally related to the auxiliary processor 1823. According to an embodiment, the auxiliary processor 1823 (e.g., the neural processing unit) may include a hardware structure specified for artificial intelligence model processing. An artificial intelligence model may be generated by machine learning. Such learning may be performed, e.g., by the electronic device 1801 where the artificial intelligence is performed or via a separate server (e.g., the server 1808). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1830 may store various data used by at least one component (e.g., the processor 1820 or the sensor module 1876) of the electronic device 1801. The various data may include, for example, software (e.g., the program 1840) and input data or output data for a command related thereto. The memory 1830 may include the volatile memory 1832 or the non-volatile memory 1834.

The program 1840 may be stored in the memory 1830 as software, and may include, for example, an operating system (OS) 1842, middleware 1844, or an application 1846.

The input module 1850 may receive a command or data to be used by another component (e.g., the processor 1820) of the electronic device 1801, from the outside (e.g., a user) of the electronic device 1801. The input module 1850 may include, for example, a microphone, a mouse, a keyboard, a key (e.g., a button), or a digital pen (e.g., a stylus pen).

The sound output module 1855 may output sound signals to the outside of the electronic device 1801. The sound output module 1855 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1860 may visually provide information to the outside (e.g., a user) of the electronic device 1801. The display module 1860 may include, for example, a display, a hologram device, or a projector and control circuitry to control a corresponding one of the display, hologram device, and projector. According to an embodiment, the display module 1860 may include a touch sensor adapted to detect a touch, or a pressure sensor adapted to measure the intensity of force incurred by the touch.

The audio module 1870 may convert a sound into an electrical signal and vice versa. According to an embodiment, the audio module 1870 may obtain the sound via the input module 1850, or output the sound via the sound output module 1855 or a headphone of an external electronic device (e.g., an electronic device 1802) directly (e.g., wiredly) or wirelessly coupled with the electronic device 1801.

The sensor module 1876 may detect an operational state (e.g., power or temperature) of the electronic device 1801 or an environmental state (e.g., a state of a user) external to the electronic device 1801, and then generate an electrical signal or data value corresponding to the detected state. According to an embodiment, the sensor module 1876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1877 may support one or more specified protocols to be used for the electronic device 1801 to be coupled with the external electronic device (e.g., the electronic device 1802) directly (e.g., wiredly) or wirelessly. According to an embodiment, the interface 1877 may include, for example, a high definition multimedia interface (HDMI), a universal serial bus (USB) interface, a secure digital (SD) card interface, or an audio interface.

A connecting terminal 1878 may include a connector via which the electronic device 1801 may be physically connected with the external electronic device (e.g., the electronic device 1802). According to an embodiment, the connecting terminal 1878 may include, for example, an HDMI connector, a USB connector, an SD card connector, or an audio connector (e.g., a headphone connector).

The haptic module 1879 may convert an electrical signal into a mechanical stimulus (e.g., a vibration or a movement) or electrical stimulus which may be recognized by a user via his tactile sensation or kinesthetic sensation. According to an embodiment, the haptic module 1879 may include, for example, a motor, a piezoelectric element, or an electric stimulator.

The camera module 1880 may capture a still image or moving images. According to an embodiment, the camera module 1880 may include one or more lenses, image sensors, image signal processors, or flashes.

The power management module 1888 may manage power supplied to the electronic device 1801. According to an embodiment, the power management module 1888 may be implemented as at least part of, for example, a power management integrated circuit (PMIC).

The battery 1889 may supply power to at least one component of the electronic device 1801. According to an embodiment, the battery 1889 may include, for example, a primary cell which is not rechargeable, a secondary cell which is rechargeable, or a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more communication processors that are operable independently from the processor 1820 (e.g., the application processor (AP)) and supports a direct (e.g., wired) communication or a wireless communication. According to an embodiment, the communication module 1890 may include a wireless communication module 1892 (e.g., a cellular communication module, a short-range wireless communication module, or a global navigation satellite system (GNSS) communication module) or a wired communication module 1894 (e.g., a local area network (LAN) communication module or a power line communication (PLC) module). A corresponding one of these communication modules may communicate with the external electronic device via the first network 1898 (e.g., a short-range communication network, such as Bluetooth^{™}, wireless-fidelity (Wi-Fi) direct, or infrared data association (IrDA)) or the second network 1899 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the subscriber identification module 1896.

The wireless communication module 1892 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., the mmWave band) to achieve, e.g., a high data transmission rate. The wireless communication module 1892 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20Gbps or more) for implementing eMBB, loss coverage (e.g., 1864dB or less) for implementing mMTC, or U-plane latency (e.g., 0.5ms or less for each of downlink (DL) and uplink (UL), or a round trip of 18ms or less) for implementing URLLC.

The antenna module 1897 may transmit or receive a signal or power to or from the outside (e.g., the external electronic device) of the electronic device 1801. According to an embodiment, the antenna module 1897 may include an antenna including a radiating element composed of a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in the communication network, such as the first network 1898 or the second network 1899, may be selected, for example, by the communication module 1890 (e.g., the wireless communication module 1892) from the plurality of antennas. The signal or the power may then be transmitted or received between the communication module 1890 and the external electronic device via the selected at least one antenna. According to an embodiment, another component (e.g., a radio frequency integrated circuit (RFIC)) other than the radiating element may be additionally formed as part of the antenna module 1897.

According to various embodiments, the antenna module 1897 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1801 and the external electronic device 1804 via the server 1808 coupled with the second network 1899. Each of the electronic devices 1802 or 1804 may be a device of a same type as, or a different type, from the electronic device 1801. According to an embodiment, all or some of operations to be executed at the electronic device 1801 may be executed at one or more of the external electronic devices 1802, 1804, or 1808. For example, if the electronic device 1801 should perform a function or a service automatically, or in response to a request from a user or another device, the electronic device 1801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or mobile edge computing. In another embodiment, the external electronic device 1804 may include an internet-of-things (IoT) device. The server 1808 may be an intelligent server using machine learning and/or a neural network. According to an embodiment, the external electronic device 1804 or the server 1808 may be included in the second network 1899. The electronic device 1801 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1840) including one or more instructions that are stored in a storage medium (e.g., internal memory 1836 or external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (100) comprising:
a frame (110);
a first band (150) extending from a first portion of the frame (110);
a second band (160) extending from a second portion of the frame (110);
a flexible display (120) disposed on the frame (110), the first band (150), and the second band (160); and
a first fixing member (181) disposed to an end portion of the first band (150), and configured to be fastened to an end portion of the second band (160);
wherein the first fixing member (181) is configured to receive a displayable portion of the flexible display (120).

2. The wearable device (100) of claim 1, comprising an actuator (210) disposed within the fixing member (181) and configured to provide a driving force to the flexible display to slide into the first fixing member (181) or slide-out from the first fixing member (181).

3. The wearable device (100) of any one of claim 1 or 2,
wherein the actuator (210) further includes:
a motor (611),
a rack gear (822) disposed on a surface of the flexible display,
a pinion gear (821) engaged with the rack gear (822) and receiving rotational force from the motor (611),
a first gear (811a) coupled to a rotation axis of the motor (611),
a second gear (811b) engaged with the first gear (811a) and rotating about a rotation axis perpendicular to the rotation axis of the first gear (811a), and
a shaft providing a rotation axis of the pinion gear (821) and the second gear (811b).

4. The wearable device (100) of any one of claims 1 to 3, further comprising a stopper (510), fixed to an end of the flexible display (120) corresponding to the end portion of the first band (150), including a hole surrounding a portion of the flexible display (120) facing the end of the flexible display (120), and disposed at an exterior of the fixing member (181).

5. The wearable device (100) of claim 4,
wherein the stopper (510) is configured to move toward the fixing member (181) while a portion of the flexible display (120) slides to an exterior of the fixing member (181), and
wherein the stopper (510) is configured to limit movement of the flexible display (120) when the stopper (510) is in contact with the fixing member (181).

6. The wearable device (100) of any one of claims 1 to 5, further comprising a layer (520) disposed on a point of the flexible display (120);
wherein the layer (520) is configured to limit movement of the flexible display (120) based on contact between the layer (520) and the fixing member (181), when a portion of the flexible display (120) is inserted into the fixing member (181) and the fixing member (181) approaches the point.

7. The wearable device (100) of any one of claims 1 to 6, further comprising a window (701;711) disposed on the flexible display (120),
wherein the window (701;711) includes:
a first portion disposed on the frame (110),
a second portion disposed on the first band (150) and thinner than the first portion, and
a third portion disposed on the second band (160) and thinner than the first portion.

8. The wearable device (100) of claim 7,
wherein the window (701;711) further includes:
a first layer disposed on the flexible display (120), and
a second layer disposed on a portion of the first layer corresponding to the first portion.

9. The wearable device (100) of any one of claims 1 to 8, further comprising:
memory storing instructions; and
a processor;
wherein the instructions, when executed by the processor, cause the electronic device to:
based on receiving a signal requesting to slide the flexible display (120) into the fixing member (181), rotate the motor (611) in a first rotation direction, and
based on receiving a signal requesting to slide the flexible display (120) to the exterior of the fixing member (181), rotate the motor (611) in a second rotation direction.

10. The wearable device (100) of claim 9,
wherein the signal requesting to slide the flexible display (120) into the fixing member (181) is a first signal input through an input device disposed on the fixing member (181), and
wherein the signal requesting to slide the flexible display (120) to the exterior of the fixing member (181) is a second signal input through the input device.

11. The wearable device (100) of claim 9 or claim 10, further comprising a sensor configured to obtain a biological signal,
wherein the signal requesting to slide the flexible display (120) into the fixing member (181) is a signal generated based on first data about the biological signal obtained through the sensor, and
wherein the signal requesting to slide the flexible display (120) to the exterior of the fixing member (181) is a signal generated based on second data distinct from the first data about the biological signal obtained through the sensor.

12. The wearable device (100) of any one of claims 1 to 11, further comprising:
a battery within the fixing member (181) to drive the motor (611);
another wireless communication module connected to the motor (611) and configured to communicate with a wireless communication module within the frame (110); and
memory including instructions that cause the wearable device (100) to control the motor (611).

13. The wearable device (100) of any one of claims 1 to 12, further comprising:
a touch sensor disposed in the flexible display (120);
memory storing instructions; and
a processor;
wherein the instructions, when executed by the processor, cause the electronic device to:
identify an object corresponding to a contact point at which an external object contacts a display area on the frame (110) among display areas of the flexible display (120), through the touch sensor, and
move the object to the display area on the first band (150), based on identifying that the external object moves to the display area on the first band (150) among the display areas of the display through the touch sensor.

14. The wearable device (100) of any one of claims 1 to 13, further comprising:
a position detection sensor disposed within the fixing member (181) and configured to detect movement of the flexible display (120);
memory storing instructions; and
a processor;
wherein the instructions, when executed by the processor, cause the electronic device to:
limit rotation of the motor (611), based on sensing data obtained through the position detection sensor.

15. The wearable device (100) of any one of claims 1 to 14, further comprising:
memory storing instructions; and
a processor;
wherein the instructions, when executed by the processor, cause the electronic device to:
display a screen on the display area of the flexible display (120),
receive an input that causes a portion of the flexible display (120) to move to the exterior of the fixing member (181), and
display, in response to receiving the input, an image on the display area extending outward from the fixing member (181).
